## Europäisches Patentamt
## European Patent Office
## Office européen des brevets

(11) Publication number: **0 145 129**
**B1**

(12) **EUROPEAN PATENT SPECIFICATION**

(45) Date of publication of patent specification: **18.04.90**

(51) Int. Cl.⁵: **B 41 J 2/12**

(21) Application number: **84305990.8**

(22) Date of filing: **31.08.84**

(54) Ink-jet recording system capable of recording a half-tone.

(30) Priority: **31.08.83 JP 159822/83**

(43) Date of publication of application:
**19.06.85 Bulletin 85/25**

(45) Publication of the grant of the patent:
**18.04.90 Bulletin 90/16**

(84) Designated Contracting States:
**DE FR GB**

(56) References cited:
**DE-A-3 012 552**
**DE-B-2 809 338**
**GB-A-2 082 871**
**US-A-4 281 333**

(73) Proprietor: **NEC CORPORATION**
**33-1, Shiba 5-chome, Minato-ku**
**Tokyo 108 (JP)**

(72) Inventor: **Tsuzuki, Mitsuo**
**c/o NEC Corporation 33-1, Shiba 5-chome**
**Minato-ku Tokyo (JP)**

(74) Representative: **Pears, David Ashley et al**
**REDDIE & GROSE 16 Theobalds Road**
**London WC1X 8PL (GB)**

Courier Press, Leamington Spa, England.

## Description

This invention relates to an ink-jet recording system capable of recording a half-tone.

In an on-demand type ink-jet print head, as disclosed in US—A—3,946,398, an ink droplet is formed by applying a driving pulse to the piezoelectric element installed on a pressure chamber of the ink-jet print head. As disclosed in US—A—4,281,333, the droplet size (volume) may be varied by controlling the energy content, for example, the amplitude and/or width of the driving pulse, whereby the size of a dot recorded on a recording medium is varied. Therefore, in an ink-jet recording system utilizing the on-demand type ink-jet print head, half-tone recording can be provided by controlling the energy content of driving pulse in response to a density of an image to be recorded. However, the droplet-volume range in which the volume of the ink droplet can be varied is not so wide, for example, the volumetric ratio of the maximum-sized ink droplet to the minimum-sized ink droplet is between 2—3 at the highest. Accordingly, the half-tone reproduction range, in which an image recorded at a predetermined density can be reproduced only by varying the volume of the ink droplets, is about 0.4—1.5 in terms of reflection density, and in particular the half-tone reproducibility of the bright portions of the image is low.

Other known half-tone recording systems include the dither method and the density pattern method. In these methods, the number of dots is increased or decreased in accordance with the density of the image to be recorded, to provide a half-tone reproduction thereof. In order to increase the number of gradations in such an imitation half-tone reproduction system, the number of dots per unit area of the image being subjected to the half-tone reproduction must be increased. However, when the dot-recording density of a recording apparatus is constant, the resolution drops.

Such a recording system employing the density pattern method is disclosed in DE—B—2 809 338. This system includes an integrator receiving the image signal and a level detector comparing the output of the integrator with a predetermined value. The output of the detector triggers a multivibrator to produce the printing signal. Thus, the pitch of the printed dots is varied corresponding to the density of the image to be printed. Therefore, the resolution of the printed image drops in this system as described above.

It is, therefore, an object of this invention to provide an ink-jet recording system capable of recording a half-tone with a high resolution over a wide level range of an image to be recorded.

According to the invention, there is provided an ink-jet recording system as defined in claim 1.

Other features and advantages of this description will be apparent from the following description of a preferred embodiment of this invention taken in conjunction with the accompanying drawings, wherein:

Fig. 1 shows an example of an ink droplet forming characteristic of an ink-jet print head to be used in this invention;

Fig. 2 shows a relationship among a pulse width of a driving pulse, a density signal, and a recorded density for illustrating a principle of this invention; and

Fig. 3 is a block diagram of an emodiment of this invention.

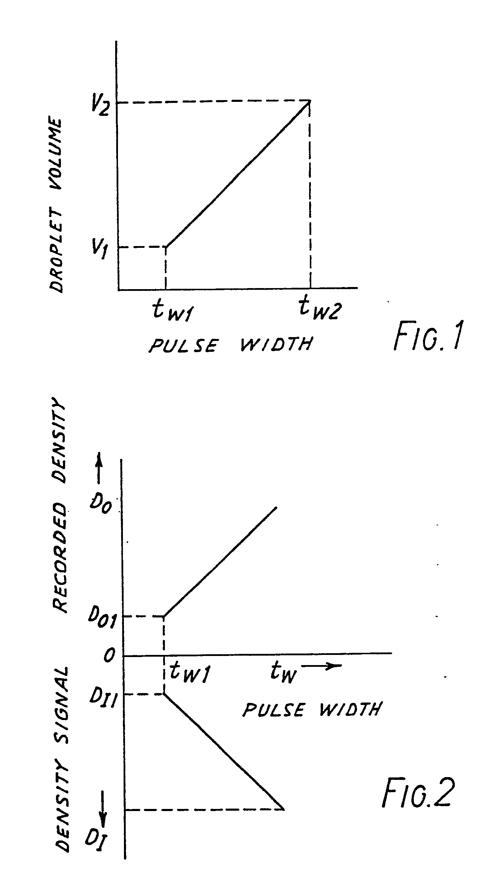

A principle of this invention will be described with reference to Figs. 1 and 2. An on-demand type ink-jet print head to be used for this invention has droplet formation characteristic shown in Fig. 1, in which an abscissa stands for a pulse width tw of a driving pulse applied to the ink-jet print head, and an ordinate for a volume V of an ink droplet ejected from the ink-jet head. As understood from Fig. 1, the volume of the ejected ink droplet is proportional to the pulse width of the driving pulse over the width range from $t_{w1}$ to $t_{w2}$. The pulse width of the driving pulse is determined in response to a density signal indicative of the density of the image to be recorded.

Fig. 2 shows a relationship between the density signal $D_i$ and the pulse width $t_w$, and a relationship between the pulse width $t_w$ and a recorded density $D_0$ on a recordng medium on which a half-tone recording is performed at a constant dot pitch. A dot of a size corresponding to a level of the density signal $D_i$ can be recorded on the recording medium by selecting the pulse width $t_w$ corresponding to the level of the density signal $D_i$. The recorded density $D_0$ on the recording medium recorded at a constant dot pitch is proportional to the dot size corresponding to the level of the density signal $D_i$.

According to this invention, when the density signal is equal to or higher in level than the minimum density signal $D_{I1}$, the driving pulse having the pulse width proportional to the density signal level is applied to the ink-jet head, thereby to record the dot having the size proportional to the density signal level. When the density signal is lower in level than the minimum density signal $D_{I1}$, no ejection of the ink droplet occurs, and the sum of this density signal and a density signal at a subsequent point is used as a new density signal governing the recording of the subsequent point. However, once a dot has been recorded, nothing is added to the density signal for a subsequent point.

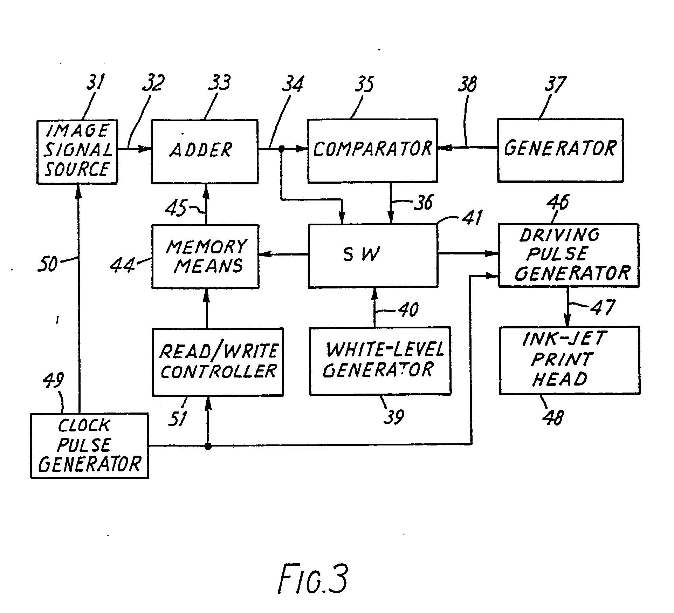

Referring to Fig. 3, an embodiment of this invention comparises an image signal source 31, an adder 33, a comparator 35, a minimum density signal generator 37, a white-level density signal generator 39, a switch 41, memory means such as a memory and a register 44, a driving pulse generator 46, a clock pulse generator 49, a read/write controller 51, and the ink-jet print head 48.

The image signal source 31 generates, in synchronism with a clock pulse 50 from the clock pulse generator 49, the density signal 32 indicative of the image to be recorded. The density signal 32 is supplied to the adder 33, which is also supplied ith a stored density signal 45 from the register 44 under the control of the read/write controller 51. The added density signal 34 is supplied to the comparator 35, which is also supplied with a minimum density signal 38 indicative of the minimum density signal level $D_{11}$ (Fig. 2) and corresponding to a minimum recording dot from the generator 37. In the comparator 35, the density signal 34 from the adder 33 is compared in level with the minimum density signal 38 to provide a detection signal 36. The detection signal 36 is supplied as a switching signal to the switch 41, which is supplied with the density signal 34 from the adder 33 and a white-level density signal (zero-level signal) 40 from the generator 39.

When the density signal 34 is less in level than the minimum density signal 38, the detection signal 36 controls the switch 41 so that the density signal 34 is supplied to the register 44 and the white-level density signal 40 is supplied to the driving pulse generator 46. The register 44 stores the density signal 34 supplied through the switch 41 under the control of the read/write controller 51. The previously stored density signal in the register 44 is replaced by the new signal. Because the white-level density signal (zero-level signal) 40 is supplied through the switch 41 to the driving pulse generator 46, no ejection of the ink droplet is performed in the ink-jet print head 48.

Conversely, when the density signal 34 is equal to or higher in level than the minimum density signal 38, the detection signal 36 controls the switch 41 so that the density signal 34 is supplied to the driving pulse generator 46 and the white-level density signal 40 is supplied to the register 44. The white-level density signal 40 is stored as new stored density signal in the register 44, whereby no output is supplied from the register 44 to the adder 33 at a subsequent point. On the other hand, the driving pulse generator 46 supplied with the density signal 34 generates the driving pulse having the pulse width proportional to the density signal 34 and supplies it to the ink-jet print head 48, thereby to record the dot having the size corresponding to the density signal 34. The above operation is performed in synchronism with the clock pulse 50.

As described above, when the density signal 32 is less in level than the minimum density signal 38, no dot is recorded and the density signal is added to the density signal for a subsequent point. Accordingly, in such a low-density region, no dot is recorded until the sum of the density signals at several points exceeds in level the minimum density signal 38. In the higher density region in which the density signal 32 directly indicative of the image to be recorded is higher in level than the minimum density signal 38, the density signal 32 is supplied through the adder 33 and the switch 41 to the driving pulse generator 46 as it is, thereby to record the dot having the size corresponding to the density signal 32.

Although the density signal 34 less in level than the minimum density signal 38 is stored in the register 44 for adding to that for a subsequent point without recording and this operation is repeated until the density signal 34 exceeds in level the minimum density signal 38 in the above-mentioned embodiment, it is possible to replace the content of the register 44 (the stored density signal 34) by the white-level density signal 40 when the density signal 34 is less in level than the minimum density signal 38 for a predetermined number of times in succession. If the number "4" is selected as the predetermined number in case of the recording density of 8 dots/mm, the resolution is 2 pel/mm at the lowest. When this number is increased, the half-tone reproduction range with respect to the bright portions expands, but the resolution deteriorates. It is preferable to select this number so that the resolution of at least 0.5 pel/mm is obtained.

In the above description, the pulse-width of the driving pulse is varied in response to the density signal indicative of the image to be recorded. It is possible to vary the pulse-width and/or the pulse-amplitude of the driving pulse so as to control the energy content of the driving pulse in response to the density signal.

## Claims

1. An ink-jet recording system for recording an image on a recording medium, comprising an ink-jet print head (48) for ejecting ink droplets on to the recording medium; means (46) for generating driving pulses supplied to the ink-jet print head, the volume of ink droplets ejected from the ink-jet print head corresponding to the energy content of the driving pulses; memory means (44) providing a first output signal corresponding to information stored therein; means (33) for adding an image signal indicative of density of a desired dot image to the first output signal and for supplying a second output signal indicative of the sum value; means (35) for comparing the second output signal with a predetermined value; and switch means (41) responsive to the comparing means (35) for supplying the second output signal to the driving pulse generating means (46) to determine the energy content of the driving pulses when the second output signal is greater than the predetermined value; characterized by white-level generating means (39) for generating a white-level signal indicative of no ejection of an ink droplet; and in that the switch means (41) supplies the white-level signal to the driving pulse generating means (46) and stores the second output signal in the memory means (44) when the second output signal is less than said predetermined value.

2. An ink-jet recording system according to claim 1, characterized in that the content of the memory means (44) is cleared when the second output signal is supplied to the driving pulse generating means (46).

3. An ink-jet recording system according to claim 1 or 2, characterized in that the content of the memory means (44) is cleared when the second output signal fails to reach the predetermined level after a predetermined number of consecutive image signals.

4. An ink-jet recording system according to any of claims 1 to 3, characterized in that the pulse-width and/or pulse-amplitude of the driving pulse is/are varied in response to the second output signal.

## Patentansprüche

1. Tintenstrahl-Aufzeichnungssystem zur Aufzeichnung eines Bildes auf einem Aufzeichnungsmedium mit einem Tintenstrahl-Druckkopf (48) zum Ausstoßen von Tintentröpfchen auf das Aufzeichnungsmedium, einer Einrichtung (46) zum Erzeugen von an den Tintenstrahl-Druckkopf gelieferten Antriebsimpulsen, wobei das Volumen der von dem Tintenstrahl-Druckkopf ausgestoßenen Tintentröpfchen dem Energieinhalt der Antriebsimpulse entspricht, einer Speichereinrichtung (44), die ein erstes Ausgangssignal bereitstellt, das der darin gespeicherten Information entspricht, einer Einrichtung (33) zum Addieren eines Bildsignals, das die Dichte eines gewünschten Punktbilds angibt, zu dem ersten Ausgangssignal und zum Liefern eines zweiten Ausgangssignals, das den Summenwert angibt, einer Einrichtung (35) zum Vergleichen des zweiten Ausgangssignals mit einem bestimmten Wert und einer Schaltereinrichtung (41), die auf die Vergleichseinrichtung (35) anspricht zum Liefern des zweiten Ausgangssignals an die Antriebsimpuls-Erzeugungseinrichtung (46), so daß der Energieinhalt der Antriebsimpulse bestimmt wird, wenn das zweite Ausgangssignal größer als der bestimmte Wert ist, gekennzeichnet durch eine Weißpegel-Erzeugungseinrichtung (39) zum Erzeugen eines Weißpegel-Signals, das angibt, wenn keine Tintentropfen ausgestoßen werden, und daß die Schaltereinrichtung (41) das Weißpegel-Signal an die Antriebsimpuls-Erzeugungseinrichtung (46) liefert und das zweite Ausgangssignal in der Speichereinrichtung (44) speichert, wen das zweite Ausgangssignal kleiner als der bestimmte Wert ist.

2. Tintenstrahl-Aufzeichnungssystem nach Anspruch 1, dadurch gekennzeichnet, daß der Inhalt der Speichereinrichtung (44) gelöscht wird, wenn das zweite Ausgangssignal an die Antriebsimpuls-Erzeugungseinrichtung (46) geliefert wird.

3. Tintenstrahl-Aufzeichnungssystem nach Anspruch 1 oder 2, dadurch gekennzeichnet, daß der Inhalt der Speichereinrichtung (44) gelöscht wird, wenn das zweite Ausgangssignal nach einer bestimmten Anzahl von aufeinanderfolgenden Bildsignalen nicht den bestimmten Wert erreicht.

4. Tintenstrahl-Aufzeichnungssystem nach einem der Ansprüche 1 bis 3, dadurch gekennzeichnet, daß die Pulsbreite und/oder Pulsamplitude des Antriebsimpulses als Antwort auf das zweite Ausgangssignal verändert wird.

## Revendications

1. Système d'enregistrement à jet d'encre afin d'enregistuer une image sur un support d'enregistrement, comprenant une tête (48) d'impression à jet d'encre afin d'éjecter des gouttelettes d'encre sur le support d'enregistrement; un moyen (46) pour produire des impulsions d'attaque fournies à la tête d'impression à jet d'encre, le volume des gouttelettes d'encre éjectées par la tête d'impression à jet d'encre correspondant au contenu énergétique des impulsions d'attaque, un moyen de mémoire (44) fournissant un premier signal de sortie correspondant à l'information stockée dans celui-ci; un moyen (33) pour ajouter un signal d'image représentatif de la densité d'une image de point désirée au premier signal de sortie et pour fournir un second signal de sortie représentatif de la valeur de la somme; un moyen (35) pour comparer le second signal de sortie à la valeur prédéterminée; et un moyen de commutateur (41) répondant au moyen de comparaison (35) pour fournir le second signal de sortie au moyen produisant des impulsions d'attaque (46) afin de déterminer le contenu énergétique des impulsions d'attaque lorsque le second signal de sortie est supérieur à la valeur prédéterminée; caractérisé par un moyen (39) produisant un niveau de blanc pour engendrer un signal de niveau de blanc représentatif de l'absence d'éjection d'une gouttelette d'encre; et en ce que le moyen de commutateur (41) fournit le signal de niveau blanc au moyen (46) produisant des impulsions d'attaque et stocke le second signal de sortie dans le moyen de mémoire (44) lorsque le second signal de sortie est inférieur à la valeur prédéterminée.

2. Système d'enregistrement à jet d'encre selon la revendication 1 ou 2, caractérisé en ce que le contenu du moyen de mémoire est effacé lorsque le second signal de sortie est fourni au moyen (46) produisant des impulsions d'attaque.

3. Système d'enregistrement à jet d'encre selon la revendication 1 ou 2, caractérisé en ce que le contenu du moyen de mémoire est effacé lorsque le second signal de sortie n'atteint pas le niveau prédéterminé après un nombre prédéterminé de signaux consécutifs d'image.

4. Système d'enregistrement à jet d'encre selon l'une quelconque des revendications 1 à 3, caractérisé en ce que la largeur et/ou l'amplitude des impulsions des impulsions d'attaque est/sont modifiée(s) en réponse au second signal de sortie.

FIG. 1

FIG. 2

FIG.3